# EUROPEAN PATENT APPLICATION

(11) **EP 4 194 573 A1**
(43) Date of publication of application: **14.06.2023**
(21) Application number: 21852353.8
(22) Date of filing: 30.07.2021
(51) Int. Cl.: C22C 11/06, C22F 1/00, C22F 1/12, H01M 4/14

(54) **LEAD ALLOY, POSITIVE ELECTRODE FOR LEAD STORAGE BATTERY, LEAD STORAGE BATTERY, AND ELECTRICITY STORAGE SYSTEM**

(30) Priority: 05.08.2020 JP 2020133405
(71) Applicant: FURUKAWA ELECTRIC CO., LTD., Chiyoda-ku Tokyo 100-8322 (JP); The Furukawa Battery Co., Ltd., Yokohama-shi, Kanagawa-ken 240-0006 (JP)
(72) Inventor: KANEKO, Hiroshi, Tokyo 100-8322 (JP); OGIWARA, Yoshiaki, Tokyo 100-8322 (JP); YAMAUCHI, Miho, Tokyo 100-8322 (JP); TANAKA, Akira, Tokyo 100-8322 (JP); NAKAMURA, Hideto, Tokyo 100-8322 (JP); ARAGAKI, Masanobu, Tokyo 100-8322 (JP); FURUKAWA, Jun, Iwaki-shi, Fukushima 972-8501 (JP); MANGAHARA, Toru, Iwaki-shi, Fukushima 972-8501 (JP); YAMADA, Keizo, Iwaki-shi, Fukushima 972-8501 (JP); KOIDE, Ayano, Iwaki-shi, Fukushima 972-8501 (JP); SATO, Atsushi, Iwaki-shi, Fukushima 972-8501 (JP)
(74) Representative: Grünecker Patent- und Rechtsanwälte PartG mbB
(86) International application number: PCT/JP2021/028489
(87) International publication number: WO 2022/030415

(57) **Abstract**

There is provided a lead alloy capable of manufacturing a positive electrode for lead storage battery less likely to cause growth. The lead alloy contains 0.4% by mass or more and 2% by mass or less of tin and 0.004% by mass or less of bismuth, with the balance being lead and inevitable impurities. The diffraction intensity of a Cube orientation {001} <100> in a pole figure created by analyzing the surface of the lead alloy by an X-ray diffraction method is 4 times or less the diffraction intensity of a random orientation in a pole figure created by analyzing a pure lead powder by the X-ray diffraction method.

## Description

### Technical Field

The present invention relates to a lead alloy, a positive electrode for lead storage battery, a lead storage battery, and a power storage system.

### Background Art

A positive electrode of a lead storage battery includes a lead layer for positive electrode formed of a lead alloy and an active material arranged on the surface of the lead layer for positive electrode. Conventional positive electrodes for lead storage batteries (see, for example, PTL 1) have been formed of well-known lead and lead alloys.

### Citation List

### Patent Literature

PTL 1: WO 2013/073420

### Summary of Invention

### Technical Problem

However, when it has been attempted to reduce the thickness of the lead layer for positive electrode to efficiently use the internal volume of the battery, the growth of the lead layer for positive electrode is likely to occur accompanying the volume expansion of lead oxide generated by corrosion due to the lack of strength of the lead layer for positive electrode. This has posed a risk of causing the disconnection in an electric joint part between a positive electrode and a negative electrode or causing a reduction in battery performance due to the separation of the active material from the lead layer for positive electrode.

Therefore, it is an object of the present invention to provide a lead alloy capable of making the growth of the lead layer for positive electrode less likely to occur even when the thickness is reduced, a positive electrode for lead storage battery formed of the lead alloy, a lead storage battery which contains the positive electrode for lead storage battery and in which a reduction in battery performance is prevented while having a high battery capacity, and a power storage system.

### Solution to Problem

A lead alloy according to one aspect of the present invention contains: 0.4% by mass or more and 2% by mass or less of tin and 0.004% by mass or less of bismuth, with the balance being lead and inevitable impurities, in which the diffraction intensity of a cube orientation {001} <100> in a pole figure created by analyzing the surface by an X-ray diffraction method is 4 times or less the diffraction intensity of a random orientation in a pole figure created by analyzing a pure lead powder by the X-ray diffraction method.

A lead alloy according to a different aspect of the present invention contains: 0.4% by mass or more and 2% by mass or less of tin and 0.004% by mass or less of bismuth; and further at least one of 0.1% by mass or less of calcium and 0.1% by mass or less of silver, with the balance being lead and inevitable impurities, in which the diffraction intensity of a cube orientation {001} <100> in a pole figure created by analyzing the surface by an X-ray diffraction method is 4 times or less the diffraction intensity of a random orientation in a pole figure created by analyzing a pure lead powder by the X-ray diffraction method.

A positive electrode for lead storage battery according to a further different aspect of the present invention includes: a lead layer for positive electrode formed of the lead alloy according to the one aspect or the different aspect; and an active material arranged on the surface of the lead layer for positive electrode, in which the thickness of the lead layer for positive electrode is 0.5 mm or less.

A lead storage battery according to a still further different aspect of the present invention includes: the positive electrode for lead storage battery according to the still further different aspect.

A power storage system according to a yet still further different aspect of the present invention includes: the lead storage battery according to the still further different aspect, the power storage system being configured to store power in the lead storage battery.

### Advantageous Effects of Invention

The present invention can provide a lead alloy capable of making the growth of the lead layer for positive electrode less likely to occur even when the thickness is reduced, a positive electrode for lead storage battery formed of the lead alloy, a lead storage battery which contains the positive electrode for lead storage battery and in which a deterioration of the battery performance is prevented while having a high battery capacity, and a power storage system.

### Brief Description of Drawings

FIG. 1 is a cross-sectional view for explaining the structure of a bipolar lead storage battery, which is one embodiment of a lead storage battery according to the present invention; and
FIG. 2 is a view for explaining one embodiment of a power storage system according to the present invention.

### Description of Embodiments

One embodiment of the present invention will be described. This embodiment describes one example of the present invention. Further, this embodiment can be variously altered or modified and embodiments obtained by such alternations or modifications may also be included in the present invention.

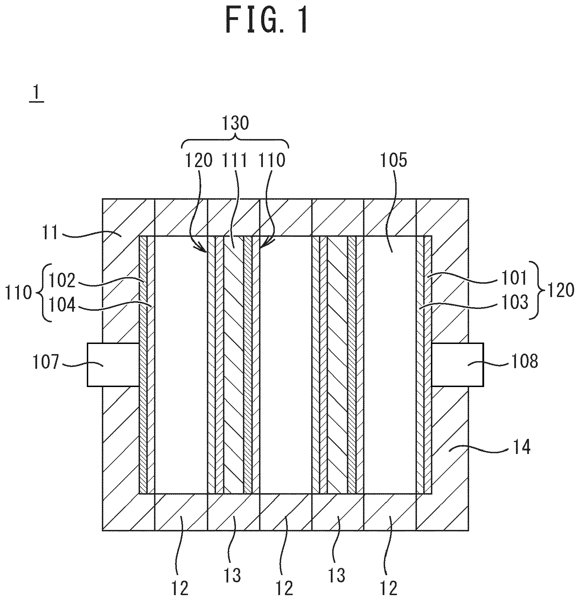

The structure of a lead storage battery 1 according to one embodiment of the present invention is described with reference to FIG. 1. The lead storage battery 1 illustrated in FIG. 1 is a bipolar lead storage battery and includes: a first plate unit in which a negative electrode 110 is fixed to a flat plate-like first plate 11; a second plate unit in which an electrolytic layer 105 is fixed to a frame plate-like second plate 12; a third plate unit in which a positive electrode 120, a substrate 111, and the negative electrode 110 are fixed in order to a frame plate-like third plate 13; and a fourth plate unit in which the positive electrode 120 is fixed to a flat plate-like fourth plate 14, and has a substantially rectangular shape by combining the first plate unit, the second plate unit, the third plate unit, and the fourth plate unit with each other.

A negative electrode terminal 107 is fixed to the first plate 11 in a state of being electrically connected to the negative electrode 110 fixed to the first plate 11.

A positive electrode terminal 108 is fixed to the fourth plate 14 in a state of being electrically connected to the positive electrode 120 fixed to the fourth plate 14.

The second plate unit and the third plate unit can be alternately provided in any number of stages according to a desired power storage capacity.

The first to fourth plates 11, 12, 13, 14 and the substrate 111 are formed of a well-known molded resin, for example.

The electrolytic layer 105 contains a glass fiber mat impregnated with an electrolytic solution, such as sulfuric acid, or the like, for example.

The negative electrode 110 contains a lead layer for negative electrode 102 containing a well-known lead foil and an active material layer for negative electrode 104, for example.

The positive electrode 120 contains a lead layer for positive electrode 101 containing a foil of a lead alloy of this embodiment described later and an active material layer for positive electrode 103.

The positive electrode 120 and the negative electrode 110 are separately fixed to the front surface and the back surface of the substrate 111 and are electrically connected by an appropriate method. Alternatively, the positive electrode 120 and the negative electrode 110 may be separately fixed to one surface of each of the two substrates 111, and may be fixed in a state of electrically connecting the other surfaces.

The plates 11 to 14 are fixed to each other by an appropriate method such that the inside is hermetically sealed to prevent the outflow of an electrolyte.

In the lead storage battery 1 of this embodiment having such a configuration, the substrate 111, the lead layer for positive electrode 101, the active material layer for positive electrode 103, the lead layer for negative electrode 102, and the active material layer for negative electrode 104 constitute a bipolar electrode 130, which is an electrode for lead storage battery. The bipolar electrode is an electrode in which a single electrode functions as both a positive electrode and a negative electrode.

The lead storage battery 1 of this embodiment has a battery configuration such that a plurality of cells is alternately stacked and assembled, so that the cells are connected in series, the cells each being obtained by interposing the electrolytic layer 105 between the positive electrode 120 having the active material layer for positive electrode 103 and the negative electrode 110 having the active material layer for negative electrode 104.

This embodiment describes the bipolar lead storage battery including the bipolar electrode in which a single electrode functions as both a positive electrode and a negative electrode as an example of the lead storage battery. However, the lead storage battery of this embodiment may be a lead storage battery which separately includes an electrode having a positive electrode function and an electrode having a negative electrode function, and in which both a positive electrode and a negative electrode, which are separate bodies, are alternately arranged.

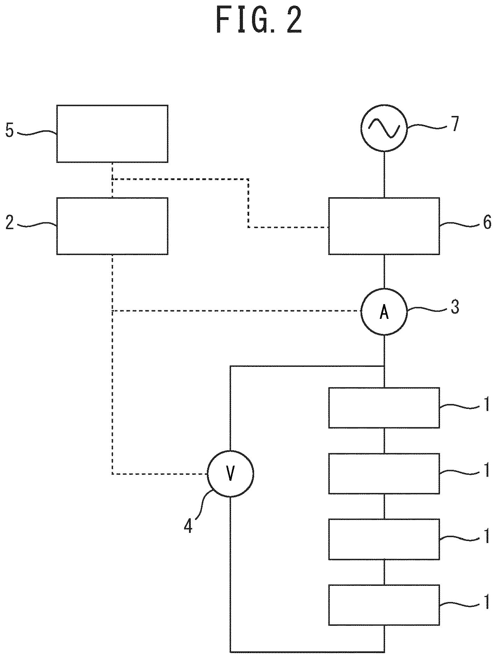

A power storage system can be constituted using the lead storage battery 1 of this embodiment illustrated in FIG. 1. FIG. 2 illustrates an example of the power storage system. The power storage system in FIG. 2 includes: a battery pack containing a plurality of lead storage batteries 1, 1··· (four in the example in FIG. 2) connected in series; an AC-DC converter 6 performing AC-DC conversion (switching between AC power and DC power) in charging and discharging the battery pack; a current sensor 3 installed between the battery pack and the AC-DC converter 6 and measuring a charge/discharge current in charging and discharging the battery pack; a voltage sensor 4 measuring the voltage of the battery pack; a power storage state monitoring device 2 receiving measurement data transmitted from the current sensor 3 and the voltage sensor 4 and implementing state determination and alarm determination of the battery pack based on the received measurement data; and an energy management system 5 receiving power storage state information transmitted by the power storage state monitoring device 2 based on the implemented state determination and alarm determination and determining whether the charge or the discharge of the battery pack is implemented based on the received power storage state information.

The energy management system 5 determines whether the charge or the discharge of the battery pack is implemented based on the power storage state information received from the power storage state monitoring device 2, and sends a signal instructing the implementation of the charge or the discharge to the AC-DC converter 6. When receiving the signal instructing the implementation of the discharge, the AC-DC converter 6 converts DC power discharged from the battery pack into AC power and outputs the AC power to a commercial power system 7. On the other hand, when receiving the signal instructing the implementation of the charge, the AC-DC converter 6 converts AC power input from the commercial power system 7 into DC power to charge the battery pack. The number of the lead storage batteries 1 connected in series is determined by the input voltage range of the AC-DC converter 6.

### <About lead alloy constituting lead layer for positive electrode 101>

Herein, the thickness of the lead layer for positive electrode 101 is set to 0.5 mm or less in this embodiment. The lead layer for positive electrode 101 is formed of a lead alloy satisfying the following two conditions A and B such that a problem with growth is less likely to occur even with such a thickness.

### (Condition A)

A lead alloy contains 0.4% by mass or more and 2% by mass or less of tin (Sn) and 0.004% by mass or less of bismuth (Bi), with the balance being lead (Pb) and inevitable impurities or a lead alloy contains 0.4% by mass or more and 2% by mass or less of tin and 0.004% by mass or less of bismuth and further contains at least one of 0.1% by mass or less of calcium and 0.1% by mass or less of silver with the balance being lead and inevitable impurities.
(Condition B) The diffraction intensity of a cube orientation {001} <100> in a pole figure created by analyzing the surface of the lead alloy by an X-ray diffraction method is 4 times or less the diffraction intensity of a random orientation in a pole figure created by analyzing the surface of a pure lead (Pb) powder by the X-ray diffraction method.

In the lead storage battery 1 and the power storage system of this embodiment, the lead layer for positive electrode 101 is formed of the above-described lead alloy, and therefore the battery capacity is high and the electrode growth is less likely to occur. Further, an electrode formed of the above-described lead alloy is used for the lead layer for positive electrode 101, and therefore the effects that the lead storage battery 1 and the power storage system have a high battery capacity and the electrode growth is less likely to occur are exhibited. These effects are described in detail.

### [About condition A]

When tin is compounded in the lead alloy, the adhesion between the lead layer for positive electrode 101 and the active material layer for positive electrode 103 formed of the lead alloy is improved. Further, when calcium is compounded in the lead alloy, the crystal grains of the lead alloy become fine. Further, when silver is compounded in the lead alloy, the crystal grains of the lead alloy become fine. Therefore, when the lead alloy contains tin and at least one of calcium and silver, the effects that the strength of the lead alloy is increased and the lead alloy is less likely to deform are exhibited.

The tin content is more preferably 0.7% by mass or more, more preferably 1.0% by mass or more, particularly preferably 1.3% by mass or more, and most preferably 1.6% by mass or more. When the tin content is in such a range, the amount of the Cube orientation {001} <100> in the crystal structure of the lead alloy tends to be small.

The calcium content is more preferably 0.07% by mass or less, still more preferably 0.04% by mass or less, and particularly preferably 0.02% by mass or less to further improve the corrosion resistance of the lead alloy.

The silver content is more preferably 0.03% by mass or less to suppress the separation of the silver phase and improve the corrosion resistance of the lead alloy.

Calcium and silver may be positively added to the lead alloy. However, even when calcium and silver are not positively added, calcium and silver are sometimes included as inevitable impurities due to mixing from bare metals or the like. The maximum amount of both calcium and silver that can be contained as the inevitable impurities is 0.012% by mass.

On the other hand, when bismuth is contained in the lead alloy, the formability of the lead alloy by rolling or the like tends to decrease. More specifically, bismuth is one of the impurities that are preferably not contained as much as possible in the lead alloy of this embodiment. Therefore, the bismuth content in the lead alloy needs to be 0.004% by mass or less and is most preferably 0% by mass. However, considering the cost of the lead alloy, the bismuth content is preferably 0.0004% by mass or more.

On the other hand, the lead alloy sometimes contains elements other than lead, tin, calcium, silver, and bismuth. The elements are impurities inevitably contained in the lead alloy. The total content of the elements other than lead, tin, calcium, silver, and bismuth in the lead alloy is preferably 0.01% by mass or less and most preferably 0% by mass.

As described above, the lead alloy of this embodiment forming the lead layer for positive electrode is the lead alloy containing 0.4% by mass or more and 2% by mass or less of tin and 0.004% by mass or less of bismuth, with the balance being lead and inevitable impurities or the lead alloy containing 0.4% by mass or more and 2% by mass or less of tin and 0.004% by mass or less of bismuth and further containing at least one of 0.1% by mass or less of calcium and 0.1% by mass or less of silver, with the balance being lead and inevitable impurities. The lead alloy of this embodiment preferably does not contain bismuth as impurities. However, when bismuth is contained, the content needs to be 0.004% by mass or less. When the elements other than lead, tin, calcium, silver, and bismuth are contained as inevitable impurities in the lead alloy of this embodiment, the total content of the elements is preferably 0.01% by mass or less.

### [About condition B]

When the amount of the Cube orientation {001} <100> in the crystal structure of the lead alloy is large, the resistance against elastic deformation decreases, so that the elastic deformation is likely to occur, and the lead alloy is less likely to plastic deform (i.e., crystal slip deformation amount is small) and is less likely to work harden. Therefore, when the lead layer for positive electrode formed of the lead alloy with a large amount of the Cube orientation {001} <100> is reduced in thickness to increase the amount of the active material on the surface, the electrode growth is likely to occur accompanying the volume expansion of the lead oxide generated by the corrosion of the lead layer for positive electrode.

The lead alloy of this embodiment has a small amount of the Cube orientation {001} <100> in the crystal structure, and therefore the resistance against the elastic deformation is larger (i.e., Young's modulus is higher), so that the elastic deformation becomes less likely to occur. Further, the lead alloy is likely to plastic deform (i.e., the crystal slip deformation amount is large) and is likely to work harden, and therefore the deformation resistance increases when work hardening is performed.

Therefore, the lead layer for positive electrode formed of the lead alloy of this embodiment having a small amount of the Cube orientation {001} <100> is less likely to cause the electrode growth accompanying the volume expansion of lead oxide generated by the corrosion of the lead layer for positive electrode, even when the thickness is reduced to 0.5 mm or less. As a result, the disconnection in an electric joint part between a positive electrode and a negative electrode is less likely to occur or a reduction in battery performance due to the separation of the active material from the lead layer for positive electrode is less likely to occur. Therefore, the use of the positive electrode for lead storage battery containing the lead layer for positive electrode formed of the lead alloy of this embodiment enables the manufacture of a lead storage battery having a high battery capacity and less likely to cause the electrode growth.

Further, when the lead layer for positive electrode 101 is formed using the lead alloy of this embodiment, the thickness can be reduced, and therefore the battery capacity can be correspondingly increased. For example, supposing that a positive electrode has been conventionally constituted by applying a 1 mm thick active material to a 1 mm thick lead layer for positive electrode, when a positive electrode is constituted by applying a 1.8 mm thick active material to a 0.2 mm thick lead layer for positive electrode, the amount of the active material increases by 1.8 times, and therefore the battery capacity can be increased by about 1.8 times that in a conventional lead storage battery.

Further, when the bipolar lead storage battery is adopted as the lead storage battery, the bipolar lead storage battery can be used at a higher C-rate than that in a conventional lead storage battery with a low internal resistance because the bipolar lead storage battery has high internal resistance. This can reduce the size of the lead storage battery.

When the size of lead storage battery is small, the size of containers or the like can be reduced in a case of applying the lead storage battery to industrial batteries. Therefore, when the lead storage battery is buried underground, for example, the advantage is particularly large. When the lead storage battery is used for mobilities, such as automobiles, the weight of automobiles and the like can be reduced, which leads to an improvement of fuel efficiency and also enables a reduction in space in which the lead storage battery is mounted in automobiles and the like.

Further, the lead layer for positive electrode can be reduced in thickness, and therefore the lead storage battery can be reduced in weight. This can facilitate the installation work of the lead storage battery.

When the thickness of the lead layer for positive electrode 101 is set to 0.37 mm or less and more preferably set to 0.25 mm or less, the effect of the present invention that the deterioration of the battery performance is prevented while having the high battery capacity is more likely to be exhibited.

As described above, according to the electrode for lead storage battery 130 and the lead storage battery 1 of this embodiment, even when the lead layer for positive electrode is thinly constituted, the control of the crystal structure of the lead alloy suppresses the corrosion of the lead layer for positive electrode 101, so that the problem of the growth is also solved, and therefore the deterioration of the battery performance can be prevented. By reducing the thickness of the lead layer for positive electrode, the volume inside the battery can be effectively used, and therefore the battery capacity can be increased.

The amount of the Cube orientation {001} <100> in the crystal structure of the lead alloy is evaluated by the diffraction intensity of the Cube orientation {001} <100> in a pole figure created by analyzing the surface of the lead alloy by the X-ray diffraction method. Then, the amount of the random orientation in a pure lead powder is evaluated by the diffraction intensity of the random orientation in a pole figure created by analyzing the surface of the pure lead powder by the X-ray diffraction method. A ratio between the diffraction intensity of the Cube orientation {001} <100> of the lead alloy and the diffraction intensity of the random orientation of the pure lead is calculated.

In this embodiment, the diffraction intensity of the cube orientation {001} <100> in the pole figure created by analyzing the surface of the lead alloy by the X-ray diffraction method needs to be 4 times or less, preferably 1.7 times or less, and more preferably 1.4 times or less the diffraction intensity of the random orientation in the pole figure created by analyzing the pure lead powder by the X-ray diffraction method.

### (Method for controlling crystal structure of lead alloy)

The following description describes a method for controlling the crystal structure by rolling as an example of a method for controlling the crystal structure in the lead alloy of this embodiment (method for reducing the amount of the Cube orientation {001} <100>).

Conventionally, when a lead layer for positive electrode is manufactured by rolling a lead alloy, the adhesion between a rolling roll and the lead alloy has been relatively likely to occur. Therefore, the rolling has been performed by a plurality of times of rolling reduction after reducing the draft in one pass or the rolling has been performed by setting the rolling speed to a low speed to reduce the heat generation by working in many cases. However, as a result of an examination by the present inventors, it was found that the Cube orientation {001} <100> is likely to be formed when the rolling is performed under these conditions.

Thus, as a result of an examination by the present inventors, it was found that the rolling performed under the following rolling conditions is effective for achieving the state where the diffraction intensity of the cube orientation {001} <100> in the pole figure created by suppressing the formation of the cube orientation {001} <100> and analyzing the surface of the lead alloy by the X-ray diffraction method is 4 times or less the diffraction intensity of the random orientation in the pole figure created by analyzing the surface of a pure lead powder by the X-ray diffraction method.

More specifically, it is preferable to perform the rolling by one rolling reduction with the draft in one pass in the rolling set to 10% or more and 30% or less and it is more preferable to perform the rolling by one rolling reduction with the draft in one pass in the rolling set to 15% or more and 25% or less. The rolling speed in the rolling is preferably set to 10 m/min or more and 100 m/min or less and more preferably set to 30 m/min or more and 80 m/min or less.

In the rolling, a surface coating may be provided in a rolling roll to suppress the adhesion between the rolling roll and the lead alloy. Examples of the surface coating include fluorine coating and diamond-like carbon coating. Further, in the rolling, a lubricant may be used to suppress the adhesion between the rolling roll and the lead alloy. When the rolling is performed in a state where the lubricant is arranged between the rolling roll and the lead alloy, the adhesion between the rolling roll and the lead alloy can be suppressed. Examples of the lubricant include those obtained by adding dibutyl ether to a low-viscosity mineral oil and those obtained by adding propionic acid to a low-viscosity mineral oil.

### [Examples]

The present invention is more specifically described with reference to Examples and Comparative Examples below.

10 mm thick alloy sheets containing lead alloys having the alloy compositions shown in Table 1 were manufactured by melting and casting. The alloy sheets were rolled to produce 0.15 mm or 0.45 mm thick rolled foils. The rolling conditions are as follows. For Examples 1 to 9, the rolling was performed with the draft in one pass set to 20% and the rolling speed set to 40 m/min. For Comparative Examples 1 to 5, the rolling was performed with the draft in one pass set to 5% as before and the rolling speed set to 5 m/min. For Comparative Example 4 and Comparative Example 5, a defect referred to as an edge crack occurred in an edge portion of the sheet during the rolling, and therefore rolled foils were not able to produce.

**[Table 1]**

| | | Alloy composition (% by mass) | | | | | Draft (%) | Foil thickness (mm) | Diffraction intensity ratio | Battery capacity |
|---|---|---|---|---|---|---|---|---|---|---|
| | | Sn | Ca | Ag | Bi | Pb | | | | |
| Ex. | 1 | 1.7 | 0.09 | 0 | 0.002 | Balance | 20 | 0.15 | 1 | OK |
| | 2 | 1.4 | 0.06 | 0 | 0.002 | Balance | 20 | 0.15 | 1 | OK |
| | 3 | 1.1 | 0.02 | 0 | 0.002 | Balance | 20 | 0.15 | 1 | OK |
| | 4 | 1.1 | 0 | 0.02 | 0.002 | Balance | 20 | 0.15 | 2 | OK |
| | 5 | 1.4 | 0 | 0 | 0.002 | Balance | 20 | 0.15 | 2 | OK |
| | 6 | 1.7 | 0.02 | 0.02 | 0.002 | Balance | 20 | 0.15 | 2 | OK |
| | 7 | 0.5 | 0.01 | 0.01 | 0.002 | Balance | 20 | 0.15 | 2 | OK |
| | 8 | 0.8 | 0.015 | 0.015 | 0.002 | Balance | 20 | 0.45 | 3 | OK |
| | 9 | 1.8 | 0.015 | 0.015 | 0.002 | Balance | 20 | 0.45 | 2 | OK |
| Comp. Ex. | 1 | 1.4 | 0.02 | 0 | 0.002 | Balance | 5 | 0.15 | 5 | NG |
| | 2 | 1.1 | 0 | 0.02 | 0.002 | Balance | 5 | 0.15 | 7 | NG |
| | 3 | 1.4 | 0 | 0 | 0.002 | Balance | 5 | 0.15 | 6 | NG |
| | 4 | 1.7 | 0.09 | 0 | 0.010 | Balance | 5 | - | - | - |
| | 5 | 1.4 | 0 | 0 | 0.010 | Balance | 5 | - | - | - |

Next, the surface (rolled surface) of each of the produced rolled foils of Examples 1 to 9 and Comparative Examples 1 to 3 was analyzed by the X-ray diffraction method, and an (111) X-ray pole figure was created from the results. Then, the diffraction intensity of the Cube orientation {001} <100> in the pole figure was obtained. Further, the surface of a pure lead powder in the random orientation state was analyzed by the X-ray diffraction method, and a pole figure was created from the results. Then, the diffraction intensity of the random orientation in the pole figure was obtained. A diffraction intensity ratio was calculated by dividing the diffraction intensity of the random orientation by the obtained diffraction intensity of the cube orientation {001}

### <100>. The results are shown in Table 1.

Next, a bipolar electrode for bipolar lead storage battery was produced using the rolled foil of each of Examples 1 to 9 and Comparative Examples 1 to 3 as the lead layer for positive electrode. Then, a bipolar lead storage battery was manufactured using the electrode. The structures of the electrodes and the bipolar lead storage battery are almost the same as those illustrated in FIG. 1. An active material forming the active material layer for positive electrode is lead dioxide. The thickness of the active material layer for positive electrode is 1.4 mm. An active material forming the active material layer for negative electrode is lead. The thickness of the active material layer for negative electrode is 1.4 mm.

A charge/discharge cycle test in which charge and discharge were repeated was implemented to the manufactured bipolar lead storage batteries. The charge/discharge C-rate was set to 0.2 C. The number of the charge/discharge cycles was set to 1000 cycles. The lead storage battery in which the battery capacity measured after the completion of the charge/discharge cycle test was 90% or more of the initial battery capacity measured before the implementation of the charge/discharge cycle test was determined to be a lead storage battery less likely to cause the electrode growth, which was indicated as "OK" in Table 1. The lead storage battery in which the battery capacity measured after the completion of the charge/discharge cycle test was less than 90% of the initial battery capacity measured before the implementation of the charge/discharge cycle test was determined to be a lead storage battery likely to cause the electrode growth, which was indicated as "NG" in Table 1.

The results shown in Table 1 show that the lead storage batteries of Examples 1 to 9 have a diffraction intensity ratio of 3 or less, and therefore the lead storage batteries are lead storage batteries less likely to cause the electrode growth. In contrast thereto, the results show that the lead storage batteries of Comparative Examples 1 to 3 have a diffraction intensity ratio of more than 3, and therefore the lead storage batteries are lead storage batteries likely to cause the electrode growth.

### Reference Signs List

- 1: lead storage battery
- 101: lead layer for positive electrode
- 102: lead layer for negative electrode
- 103: active material layer for positive electrode
- 104: active material layer for negative electrode
- 105: electrolytic layer
- 111: substrate

## Claims

1. A lead alloy comprising:
0.4% by mass or more and 2% by mass or less of tin and 0.004% by mass or less of bismuth, with a balance being lead and inevitable impurities, wherein
a diffraction intensity of a cube orientation {001} <100> in a pole figure created by analyzing a surface by an X-ray diffraction method is 4 times or less a diffraction intensity of a random orientation in a pole figure created by analyzing a pure lead powder by the X-ray diffraction method.

2. A lead alloy comprising:
0.4% by mass or more and 2% by mass or less of tin and 0.004% by mass or less of bismuth and further at least one of 0.1% by mass or less of calcium and 0.1% by mass or less of silver, with a balance being lead and inevitable impurities, wherein
a diffraction intensity of a cube orientation {001} <100> in a pole figure created by analyzing a surface by an X-ray diffraction method is 4 times or less a diffraction intensity of a random orientation in a pole figure created by analyzing a pure lead powder by the X-ray diffraction method.

3. The lead alloy according to claim 1 or 2, wherein a content of the bismuth is 0.0004 % by mass or more and 0.004 % by mass or less.

4. A positive electrode for lead storage battery comprising:
a lead layer for positive electrode formed of the lead alloy according to any one of claims 1 to 3; and
an active material arranged on a surface of the lead layer for positive electrode, wherein
a thickness of the lead layer for positive electrode is 0.5 mm or less.

5. The positive electrode for lead storage battery according to claim 4, the positive electrode is for a bipolar lead storage battery.

6. A lead storage battery comprising:
the positive electrode for lead storage battery according to claim 4 or 5.

7. A power storage system comprising:
the lead storage battery according to claim 6,
the power storage system being configured to store power in the lead storage battery.
